(19) Europäisches Patentamt
European Patent Office
Office européen des brevets

(11) EP 3 162 430 A1

(12) EUROPEAN PATENT APPLICATION

(43) Date of publication:
03.05.2017 Bulletin 2017/18

(51) Int Cl.:
*B01D 67/00* (2006.01) *B01D 71/68* (2006.01)

(21) Application number: 15191685.5

(22) Date of filing: 27.10.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: BASF SE
67056 Ludwigshafen am Rhein (DE)

(72) Inventors:
- CHUA, Soo Keow
680418 Singapore (SG)
- TAN, Kok Wah
738098 Singapore (SG)
- NG, Say Khiam
416438 Singapore (SG)
- BAUMERT, Martin
69221 Dossenheim (DE)
- LOW, Jia Le
100065 Singapore (SG)
- WIDJOJO, Natalia
650171 Singapore (SG)
- JUNG, Marc Rudolf
098652 Singapore (SG)

(74) Representative: BASF IP Association
BASF SE
G-FLP-C006
67056 Ludwigshafen (DE)

# (54) PROCESS FOR THE PREPARATION OF A MEMBRANE WHICH COMPRISES A POLYETHERSULFONE POLYMER AND A POLYURETHANE POLYMER

(57) The present invention relates to a process for the preparation of a membrane (M) which comprises a polyethersulfone polymer and a polyurethane polymer. In this process, a solution (S) is used which comprises the polyethersulfone polymer, the polyurethane polymer and at least one aprotic polar solvent. From this at least one aprotic polar solvent, the polyethersulfone polymer and the polyurethane polymer are separated to obtain the membrane (M). Another object of the present invention is the use of a polyurethane polymer in a membrane (M) which comprises a polyethersulfone polymer to increase the elongation at break of the membrane (M). The present invention also relates to a membrane (M) which comprises a polyethersulfone polymer and a polyurethane polymer.

EP 3 162 430 A1

## Description

The present invention relates to a process for the preparation of a membrane (M) which comprises a polyethersulfone polymer and a polyurethane polymer. In this process, a solution (S) is used which comprises the polyethersulfone polymer, the polyurethane polymer and at least one aprotic polar solvent. From this at least one aprotic polar solvent, the polyethersulfone polymer and the polyurethane polymer are separated to obtain the membrane (M). Another object of the present invention is the use of a polyurethane polymer in a membrane (M) which comprises a polyethersulfone polymer to increase the elongation at break of the membrane (M). The present invention also relates to a membrane (M) which comprises a polyethersulfone polymer and a polyurethane polymer.

Polyethersulfone polymers belong to the group of polyarylene ethers. Polyarylene ethers are high-performance thermoplastics and feature high heat resistance, good mechanical properties and inherent flame retardancy. As polyarylene ethers have good biocompatibility, they are also used as materials for producing dialysis membranes.

However, polyarylene ethers that are described in the state of the art often have inadequate mechanical properties for membrane applications. They have a lower elongation at break (lower membrane flexibility) as compared to a polyvinylidene fluoride (PVDF) material (which is the competitor of polyethersulfone (PES) materials, in particular for ultrafiltration (UF) application) for example. As a result, the hollow fiber membranes from PES have a higher tendency to experience fiber breakage during cleaning (backwash) compared to PVDF material. Moreover, for some applications the functionality, in particular the permeability and the selectivity of polyethersulfone membranes, is not sufficient.

Therefore, K. B. Lee et al., Journal of Membrane Science, 2011, 370, 1-22, describe a method to modify the functionality of polyarylethersulfone membranes. In this process, the polyarylethersulfone membrane is produced as a first layer and on this layer a second layer is casted which is for example made of aromatic polyamide. However, the thus obtained two-layer membranes exhibit several drawbacks, in particular in some cases the coherence between the two layers is low and when subjected to mechanical stress, the layers can separate from each other. Moreover, their mechanical properties like the tensile strength and the elongation at break is still low due to the use of polyethersulfone polymers for the first membrane layer.

The object underlying the present invention is therefore to provide a process for the preparation of a membrane (M) which does not have the above-mentioned disadvantages of the prior art or has them only to a significantly reduced extent. In particular, the process should be carried out in a more simple, safer and more cost efficient way than the processes described in the state of the art.

This object was solved by a process for the preparation of a membrane (M), which comprises a polyethersulfone polymer and a polyurethane polymer, comprising the steps:

i) providing a solution (S), which comprises the polyethersulfone polymer, the polyurethane polymer and at least one aprotic polar solvent,

ii) separating the polyethersulfone polymer and the polyurethane polymer comprised in the solution (S) from the at least one aprotic polar solvent comprised in the solution (S) to obtain the membrane (M).

It has surprisingly been found that by the use of a polyurethane polymer in a membrane (M) which comprises a polyethersulfone polymer, the mechanical properties of the membrane (M) can be significantly increased. In particular, the polyurethane polymer leads to a higher tensile strain at break and a high elongation at break.

Moreover, it has surprisingly been found that the membrane (M) can be produced from a solution (S) which comprises the polyethersulfone polymer and the polyurethane polymer. By the inventive process, the number of casting steps, therefore, can be reduced with respect to the processes described in the state of the art. This makes the inventive process very time and cost efficient and, therefore, highly economic.

The present invention will be described in more detail hereinafter.

Step i)

In step i), a solution (S) which comprises the polyethersulfone polymer, the polyurethane polymer and at least one aprotic polar solvent is provided.

"A polyethersulfone polymer" within the context of the present invention means precisely one polyethersulfone polymer and also a mixture of two or more polyethersulfone polymers. The same holds true for "a polyurethane polymer". "A polyurethane polymer" within the context of the present invention means precisely one polyurethane polymer and also a mixture of two or more polyurethane polymers.

"At least one aprotic polar solvent" means precisely one aprotic polar solvent and also a mixture of two or more aprotic polar solvents.

Moreover, in one embodiment the solution (S) can comprise one or more further polymers different from polyethersulfone polymers and polyurethane polymers. In another embodiment the solution (S) does not comprise a further polymer different from polyethersulfone polymers and polyurethane polymers.

The solution (S) can additionally comprise further solvents that differ from the at least one aprotic polar solvent. For example, the solution (S) can additionally comprise a first protic polar solvent. Suitable first protic polar solvents are known to the skilled person.

The solution (S) can be provided in step i) by any method known to the skilled person. Preferably, the solution (S) is provided in step i) in customary vessels, particularly in those which comprise a stirring device and preferably a temperature control device.

Preferably, the solution (S) is provided by dissolving the polyethersulfone polymer and the polyurethane polymer in the at least one aprotic polar solvent.

The dissolution of the polyethersulfone polymer and the polyurethane polymer in the at least one aprotic polar solvent to provide the solution (S) is preferably affected under agitation. The dissolution of the polyethersulfone polymer and the polyurethane polymer may be effected concurrently or in succession.

Step i) is preferably carried out at elevated temperatures, especially in the range from 20 to 120°C, preferably in the range from 40 to 100°C. A person skilled in the art will choose the temperature in accordance with the at least one aprotic polar solvent.

The solution (S) preferably comprises the polyethersulfone polymer and the polyurethane polymer completely dissolved in the at least one aprotic polar solvent. This means that the solution (S) preferably comprises no solid particles of the polyethersulfone polymer and/or the polyurethane polymer. Therefore, the polyethersulfone polymer and the polyurethane polymer preferably cannot be separated from the at least one aprotic polar solvent by filtration.

The solution (S), for example, comprises from 5 to 30% by weight, preferably from 10 to 25% by weight and particularly preferably from 14 to 22% by weight of the polyethersulfone polymer, based on the sum of the percent by weight of the polyethersulfone polymer, the polyurethane polymer and the at least one aprotic polar solvent, preferably based on the total weight of the solution (S).

Another object of the present invention is therefore a process wherein the solution (S) comprises in the range from 5 to 30% by weight of the polyethersulfone polymer based on the total weight of the solution (S).

The solution (S), for example, comprises in the range from 0.0001 to 15% by weight, preferably from 0.1 to 8% by weight and particularly preferably from 0.5 to 7% by weight of the polyurethane polymer, based on the sum of the percent by weight of the polyethersulfone polymer, the polyurethane polymer and the at least one aprotic polar solvent, preferably based on the total weight of the solution (S).

Another object of the present invention is therefore a process wherein the solution (S) comprises in the range from 0.0001 to 15% by weight of the polyurethane polymer based on the total weight of the solution (S).

The solution (S) provided in step i) can furthermore comprise in the range from 65 to 94% by weight, preferably in the range from 67 to 89% by weight and particularly preferably in the range from 71 to 85.5% by weight of the at last one aprotic polar solvent, based on the sum of the percent by weight of the polyethersulfone polymer, the polyurethane polymer and the at least one aprotic polar solvent, preferably based on the total weight of the solution (S).

The solution (S) in one embodiment comprises furthermore at least one pore former agent.

"At least one pore former agent" means precisely one pore former agent or a mixture of two or more pore former agents.

Another object of the present invention is therefore a method wherein wherein the solution (S) additionally comprises at least one pore former agent.

Pore former agents are compounds that are not separated from the at least one aprotic polar solvent in step ii). In particular, pore former agents do not precipitate but are dissolved when they are immersed into at least one protic polar solvent in one preferred embodiment of the present invention. This results in pores in the membrane (M). Suitable pore former agents are known to the skilled person. Preferably the pore former agent is selected from the group consisting of ethylene glycol, diethylene glycol, methanol, ethanol, isopropoanol, polyvinylpyrrolidone, triblock copolymer of polyethylene oxide-polyphenylene oxide-polyethylene oxide, polyethylene glycol and glycerol. Triblock copolymers of polyethylene oxide-polyphenylene oxide-polyethylene oxide are also known under the trade name pluronic.

Another object of the present invention is therefore a process wherein the solution (S) additionally comprises at least one pore former agent selected from the group consisting of polyvinylpyrrolidone, polyethylene glycol and glycerol.

If the solution (S) comprises at least one pore former agent, the solution (S) generally comprises in the range from 0.0001 to 15% by weight, preferably from 1 to 8% by weight and particularly preferably from 2 to 7% by weight of the at least one pore former agent, based on the total weight of the solution (S).

The solution (S) can optionally comprise further additives. Suitable further additives are known to the skilled person and are, for example, flame retardants, plasticizers and antioxidants.

Preferably, the solution (S) does not comprise further additives.

To the person skilled in the art it should be clear that if the solution (S) comprises at least one pore former agent, the percent by weight of the at least one aprotic polar solvent is reduced accordingly so that the percent by weight

of the polyethersulfone polymer, of the polyurethane polymer, of the at least one aprotic polar solvent and of the at least one pore former agent add up to 100%.

If the solution (S) comprises further additives, the solution (S) generally comprises in the range from 0.1 to 20% by weight, preferably in the range from 0.5 to 10% by weight and particularly preferred in the range from 1 to 5% by weight of the further additives, based on the total weight of the solution (S).

To the person skilled in the art it should be clear that if the solution (S) comprises further additives, the percent by weight of the at least one aprotic polar solvent is reduced acordingly so that the percent by weight of the polyethersulfone polymer, of the polyuethane polymer, of the at least one aprotic polar solvent and of the further additives add up to 100%.

The percent by weight of the polyethersulfone polymer, the polyurethane polymer, the at least one aprotic polar solvent and optionally the at least one pore former agent and the further additives generally add up to 100%. If no at least one pore former agent and no further additives are comprised in the solution (S), then the percent by weight of the polyethersulfone polymer, the polyurethane polymer and the at least one aprotic polar solvent generally add up to 100%.

As the at least one aprotic polar solvent, any aprotic polar solvent in which the polyethersulfone polymer and the polyurethane polymer are soluble are suitable. "Soluble" is to be understood as meaning that the amount of polyethersulfone polymer and polyurethane polymer that dissolve in the at least one aprotic polar solvent at room temperature (20°C) is not less than 10% by weight, preferably not less than 20% by weight and especially not less than 25% by weight, based on the total weight of the solution (S).

Preferably, the at least one aprotic polar solvent is selected from the group consisting of N-methyl-2-pyrrolidone (NMP), N-ethyl-2-pyrrolidone (NEP), sulfolane, dimethylsulfoxide (DMSO), dimethylformamide (DMF), anisol and dimethylacetamide.

Another object of the present invention is therefore a process wherein the at least one aprotic polar solvent, which is comprised in the solution (S) is selected from the group consisting of N-methyl-2-pyrrolidone, N-ethyl-2-pyrrolidone, sulfolane, dimethylsulfoxide, dimethylformamide, anisole and dimethylacetamide.

<u>Polyethersulfone polymer</u>

Polyethersulfone polymers are a class of polymers known to the person skilled in the art. In principle, it is possible to use any of the polyethersulfone polymers that are known to the person skilled in the art and/or that can be produced by known methods. The polyethersulfone polymers can be homopolymers or copolymers. Appropriate methods for the preparation of polyethersulfone polymers are explained at a later stage below. Preferred polyethersulfone polymers are composed of units of the general formula I:

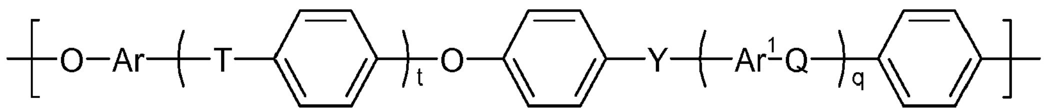

(I),

where the definitions of the symbols t, q, Q, T, Y, Ar, and $Ar^1$ are as follows:

t and q: are mutually independently 0, 1, 2, or 3,

Q, T, and Y:are mutually independently respectively a chemical bond or group selected from -O-, -S-, $-SO_2-$ S=O, C=O, -N=N- and $-CR^aR^b-$, where $R^a$ and $R^b$ are mutually independently respectively a hydrogen atom or a $C_1$-$C_{12}$-alkyl, $C_1$-$C_{12}$-alkoxy or $C_6$-$C_{18}$-aryl group, and where at least one of Q, T and Y is $-SO_2-$ and

Ar and $Ar^1$: are mutually independently an arylene group having from 6 to 18 carbon atoms.

If Q, T, or Y, with the abovementioned preconditions, is a chemical bond, this means that the adjacent group on the left-hand side and the adjacent group on the right-hand side have direct linkage to one another by way of a chemical bond.

However, it is preferable that Q, T, and Y in formula I are mutually independently selected from -O- and $-SO_2-$, with the provision that at least one of the group consisting of Q, T, and Y is $-SO_2-$.

To the extent that Q, T, or Y is $-CR^aR^b-$, $R^a$ and $R^b$ are mutually independently respectively a hydrogen atom or a $C_1$-$C_{12}$-alkyl, $C_1$-$C_{12}$-alkoxy or $C_6$-$C_{18}$-aryl group.

Preferred $C_1$-$C_{12}$-alkyl groups comprise linear and branched, saturated alkyl groups having from 1 to 12 carbon atoms. Particular mention may be made of the following moieties: $C_1$-$C_6$-alkyl moiety, such as methyl, ethyl, n-propyl, iospropyl, n-butyl, sec-butyl, 2- or 3-methylpentyl, and longer-chain moieties, such as unbranched heptyl, octyl, nonyl, decyl, undecyl, and lauryl, and the singly or multiply branched analogs thereof.

Alkyl moieties that can be used in the abovementioned $C_1$-$C_{12}$-alkoxy groups that can be used are the alkyl

groups defined at an earlier stage above having from 1 to 12 carbon atoms. Cycloalkyl moieties that can be used with preference in particular comprise $C_3$-$C_{12}$-cycloalkyl moieties, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, cyclohexylmethyl, -dimethyl, and -trimethyl.

Ar and $Ar^1$ are mutually independently $C_6$-$C_{18}$-arylene groups. On the basis of the starting materials described at a later stage below, Ar is preferably derived from an electron-rich aromatic substance that is readily susceptible to electrophilic attack, and that is preferably selected from the group consisting of hydroquinone, resorcinol, dihydroxynaphthalene, in particular 2,7-dihydroxynaphthalene, and 4,4'-bisphenol. $Ar^1$ is preferably an unsubstituted $C_6$- or $C_{12}$-arylene group.

Particular $C_6$-$C_{18}$-arylene groups Ar and $Ar^1$ that can be used are phenylene groups, such as 1,2-, 1,3-, and 1,4-phenylene, naphthylene groups, such as 1,6-, 1,7-, 2,6-, and 2,7-naphthylene, and also the arylene groups derived from anthracene, from phenanthrene, and from naphthacene.

It is preferable that, in the preferred embodiment of formula I, Ar and $Ar^1$ are selected mutually independently from the group consisting of 1,4-phenylene, 1,3-phenylene, naphthylene, in particular 2,7-dihydroxynaphthylene, and 4,4'-bisphenylene.

Preferred polyarylene ethers are those comprising at least one of the following units Ia to Io as repeating structural units:

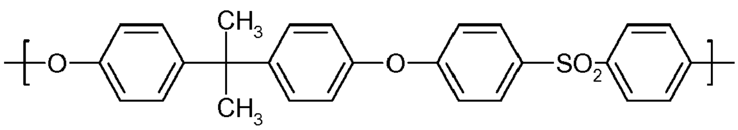
Ia

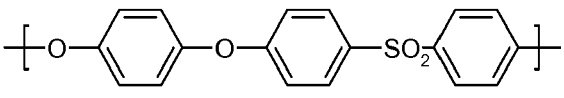
Ib

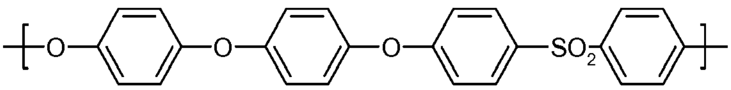
Ic

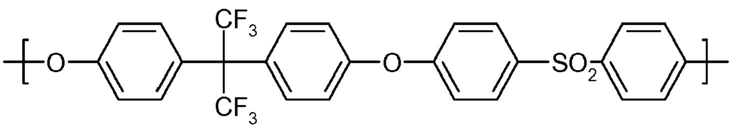
Id

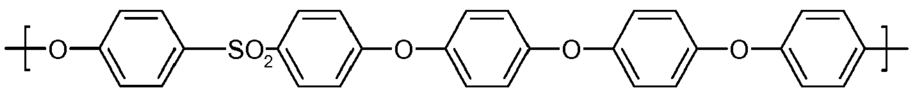
Ie

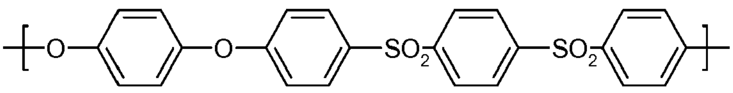
If

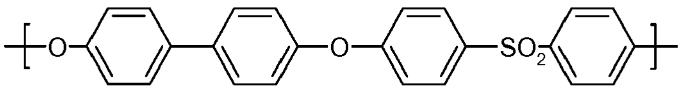
Ig

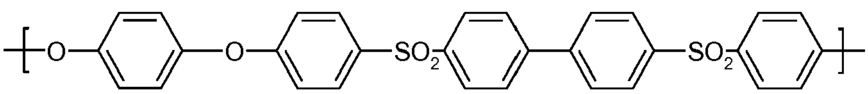
Ih

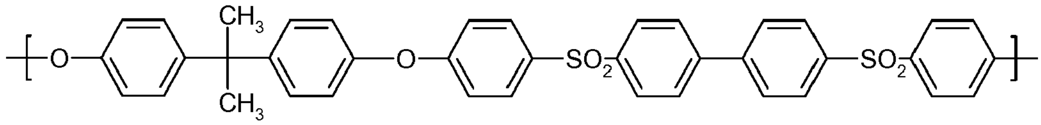

Ii

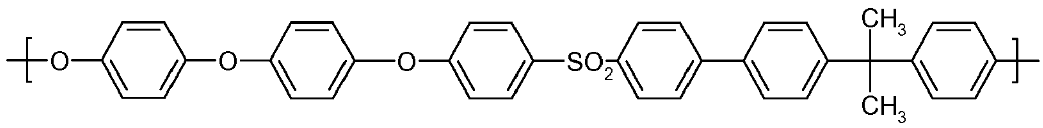

Ij

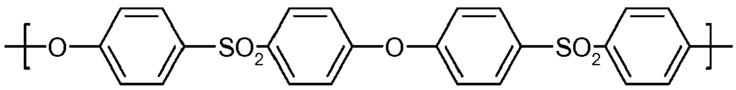

Ik

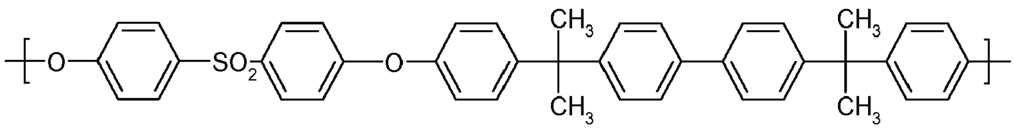

I l

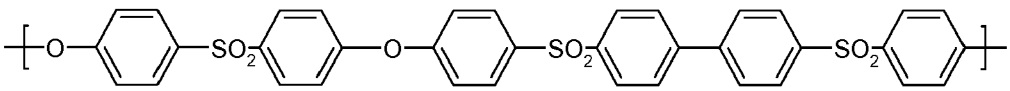

Im

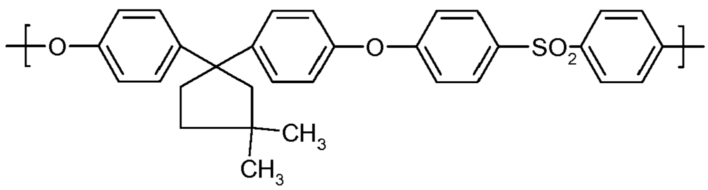

In

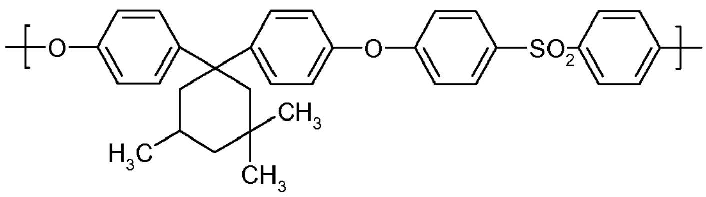

Io

Other preferred units in addition to the preferred units Ia to Io are those in which one or more 1,4-phenylene units which derive from hydroquinone have been replaced by 1,3-phenylene units which derive from resorcinol, or by naphthylene units which derive from dihydroxynaphthalene.

Particularly preferred units of the general formula I are the units Ia, Ig, and Ik. Particular preference is moreover given to polyethersulfone polymers which are composed essentially of one type of units of the general formula I, in particular of a unit selected from Ia, Ig, and Ik.

In one particularly preferred embodiment, Ar = 1,4-phenylene, t = 1, q = 0, T is a chemical bond, and Y = $SO_2$. Particularly preferred polyethersulfone polymers composed of the abovementioned repeating unit are termed polyphenylene sulfone (PPSU) (formula Ig).

In another particularly preferred embodiment, Ar = 1,4-phenylene, t = 1, q = 0, T = $C(CH_3)_2$, and Y = $SO_2$. Particularly preferred polyethersulfone polymers composed of the abovementioned repeating unit are termed polysulfone (PSU) (formula Ia).

In another particularly preferred embodiment, Ar = 1,4-phenylene, t = 1, q = 0, and T = Y = $SO_2$. Particularly preferred polyethersulfone polymers composed of the abovementioned repeating unit are termed polyether sulfone (PESU) (formula Ik).

For the purposes of the present invention, abbreviations, such as PPSU, PESU, and PSU are in accordance with DIN EN ISO 1043-1 (Plastics - Symbols and abbreviated terms - Part 1: Basic polymers and their special characteristics (ISO 1043-1:2001); German version EN ISO 1043-1:2002).

The weight-average molar masses of the polyethersulfone polymers are preferably from 10 000 to 300 000 g/mol, in particular from 15 000 to 120 000 g/mol, particularly preferably from 18 000 to 100 000 g/mol, determined by means of gel permeation chromatography in the solvent dimethylacetamide against narrowly distributed polymethyl methacrylates as standard.

Production processes which lead to the abovementioned polyethersulfone polymers are known per se to the person skilled in the art and are described by way of example in Herman F. Mark, "Encyclopedia of Polymer Science and Technology", third edition, volume 4, 2003, "Polysulfones" chapter on pages 2 to 8, and also Hans R. Kricheldorf, "Aromatic Polyethers" in: Handbook of Polymer Synthesis, second edition, 2005 on pages 427 to 443.

Particular preference is given to the reaction of at least one aromatic compound having two halogen substituents and of at least one aromatic compound having two functional groups which are reactive toward abovementioned halogen substituents, in aprotic polar solvents in the presence of anhydrous alkali metal carbonate, in particular sodium carbonate, potassium carbonate, calcium carbonate, or a mixture thereof, very particular preference being given here to potassium carbonate. A particularly suitable combination is N-methyl-2-pyrrolidone as solvent and potassium carbonate as base.

It is preferable that the polyethersulfone polymers have either terminal halogen groups, in particular terminal chlorine groups, or etherified terminal groups, in particular terminal alkyl ether groups, where these are obtainable via reaction of the terminal OH groups or terminal phenolate groups with suitable etherifying agents.

Examples of suitable etherifying agents are monofunctional alkyl or aryl halide, for example $C_1$-$C_6$-alkyl chloride, $C_1$-$C_6$-alkyl bromide, or $C_1$-$C_6$-alkyl iodide, preferably methyl chloride, or benzyl chloride, benzyl bromide, or benzyl iodide, or a mixture thereof. Preferred terminal groups for the purposes of the polyethersulfone polymers are halogen, in particular chlorine, alkoxy, in particular methoxy, aryloxy, in particular phenoxy, and benzyloxy.

Polyurethane polymer

As polyurethane polymer, any polyurethane polymer that can be dissolved in the at least one aprotic polar solvent is suitable.

The polyurethane polymer can be a homopolymer or a copolymer.

Preferably, the polyurethane polymer is obtained by mixing (a) at least one polyisocyanate with (b) at least one compound having isocyanate reactive groups, (c) optionally at least one blowing agent, (d) optionally at least one catalyst and (e) optionally further additives to form a reaction mixture and curing the reaction mixture to obtain the polyurethane polymer.

As component (a), the at least one polyisocyanate, it is possible to use all customary aliphatic, cycloaliphatic and/or aromatic di- and/or polyisocyanates which have a viscosity of less than 600 mPas, preferably less than 500 mPas, more preferably less than 300 mPas when measured at 25°C. Particular preference for use as isocyanates is given to toluene diisocyanate (TDI), diphenylmethane diisocyanate (MDI) and mixtures of diphenylmethane diisocyanate and polymeric diphenylmethane diisocyanate (PMDI). Diphenylmethane diisocyanate (MDI) is used in particular.

These particularly preferred isocyanates may be wholly or partly modified with uretdione, carbamate, isocyanurate, carbodiimide, allophanate and/or urethane groups. Urethane groups are preferred to wholly or partly modify the isocyanates.

As compounds having isocyanate reactive groups (b), there can be used any compound that has at least two isocyanate reactive groups such as OH, SH, NH or carbon acid groups. Suitable components (b) are known to the skilled person. For example, the component (b) can be selected from the group consisting of polyetherols, polyesterols and aromatic polyether diols. Aromatic polyether diols are particularly preferred.

Suitable polyetherols are known to the skilled person. They can be obtained via known methods, for example by an anionic polymerization of alkylene oxides in the presence of catalysts, which is initiated with at least one starter molecule comprising from 2 to 8, preferably from 2 to 6 reactive hydrogen atoms in bound form. Useful catalysts include alkali metal hydroxides such as sodium hydroxide or potassium hydroxide or alkali metal alkoxides such as sodium methoxide, sodium ethoxide, potassium ethoxide or potassium isopropoxide. In the case of cationic polymerization, Lewis acids as antimony pentachloride, boron trifluoride etherate, or fuller's earth are suitable catalysts. Useful catalysts further include double metal cyanide compounds, so called DMC-catalysts, and also amine-based catalysts.

The alkylene oxides used preferably comprise one or more compounds having from 2 to 4 carbon atoms in the alkylene radical such as tetrahydrofuran, 1,3-propylene oxide, 1,2-butylene oxide, or 2,3-butylene oxide or mixtures thereof.

Suitable polyester alcohols are known to the skilled person. They are usually obtained by condensation of polyfunctional alcohols having from 2 to 12 carbon atoms such as ethylene glycol, diethylene glycol, butandiol, trimethylol propane, glycerol or pentaerythritol, with polyfunctional carboxylic acids having from 2 to 12 carbon atoms, for example succinic acid, glutaric acid, adipic acid, suberic acid, azelaic acid, sebacic acid, decanedicarboxylic acid, maleic acid, fumaric acid, phthalic acid, isophthalic acid, terephthalic acid, the isomers of naphthalene dicarboxylic acids or the

anhydrides of the acids mentioned.

Suitable aromatic polyether diols are known to the skilled person. For example, the aromatic polyether diol can be an alkoxylation product of an aromatic diol, preferably of bisphenol A and ethylene oxide and/or propylene oxide. In a further preferred embodiment, the aromatic polyether diol is a polyethersulfone polymer having OH end groups. If the aromatic polyether diol is a polyethersulfone polymer, then the embodiments and preferences described above for the polyethersulfone polymer hold true.

As blowing agent, any blowing agent known to the skilled person suitable for the production of polyurethane foams is suitable. The blowing agent can be a chemically or a physically acting compound.

A catalyst may be any compound that speeds the isocyanate water reaction and/or the isocyanate polyol reaction. Such compounds are as well known to the skilled person and for example described in "Kunststoffhandbuch. Vol. 7. Polyurethane", Karl-Hanser-Verlag, 3. Edt. 1993, Chapt. 3.4.1. These comprise amine-based catalysts and catalysts based on organometallic compounds.

Possible further additives (e) include flame retardants, plasticizers, form stabilizers, further fillers and other additional agents such as antioxidants.

In a preferred embodiment, an end group regulator is used. Suitable end group regulators are known to the skilled person. A preferred end group regulator is a polyamide polymer, preferably a polyamide polymer is used having carboxylic acid end groups. These carboxylic acid end groups are able to react with the isocyanate groups.

Suitable polyamides are known to the skilled person.

Preferred polyamides are semicrystalline or amorphous polyamides.

Examples of polyamides are those that derive from lactams having from 7 to 13 ring members. Other suitable polyamides are those obtained through reaction of dicarboxylic acids with diamines.

Examples of polyamides that derive from lactams are polyamides that derive from polycaprolactam, from polycaprylolactam, and/or from polylaurolactam.

If polyamides are used that are obtainable from dicarboxylic acids and diamines, dicarboxylic acids that can be used are alkanedicarboxylic acids having from 6 to 14 carbon atoms, preferably from 6 to 10 carbon atoms. Aromatic dicarboxylic acids are also suitable.

Examples that may be mentioned here as dicarboxylic acids are adipic acid, azelaic acid, sebacic acid, dodecanedicarboxylic acid, and also terephthalic acid and/or isophthalic acid.

Examples of suitable diamines are alkanediamines, having from 4 to 14 carbon atoms, in particular alkanediamines having from 6 to 8 carbon atoms, and also aromatic diamines, for example m-xylylenediamine, di(4-aminophenyl)methane, di(4-aminocyclohexyl)methane, 2,2-di(4-aminophenyl)propane, 2,2-di(4-aminocyclohexyl)-propane, and 1,5-diamino-2-methylpentane.

Other suitable polyamides are those obtainable through copolymerization of two or more of the monomers mentioned above and mentioned below, and mixtures of a plurality of polyamides in any desired mixing ratio.

Preferred polyamides are polyhexamethyleneadipamide, polyhexamethylene-sebacamide, and polycaprolactam, and also nylon-6/6,6, in particular having a proportion of from 75 to 95% by weight of caprolactam units.

Particular preference is given to mixtures of nylon-6 with other polyamides, in particular with nylon-6/6,6 (PA 6/66), particular preference being given to mixtures of from 80 to 50% by weight of PA 6 and from 20 to 50% by weight of PA 6/66, where the PA 6/66 comprises from 75 to 95% by weight of caprolactam units, based on the total weight of the PA 6/66 in the mixture.

The following, non-exclusive list comprises the abovementioned polyamides, and other suitable polyamides, and also the monomers comprised.

AB polymers:

| | |
|---|---|
| PA 4 | Pyrrolidone |
| PA 6 | ε-Caprolactam |
| PA 7 | Enantholactam |
| PA 8 | Caprylolactam |
| PA 9 | 9-Aminopelargonic acid |
| PA 11 | 11-Aminoundecanoic acid |
| PA 12 | Laurolactam |

AA/BB polymers:

| | |
|---|---|
| PA 46 | Tetramethylenediamine, adipic acid |
| PA 66 | Hexamethylenediamine, adipic acid |
| PA 69 | Hexamethlyenediamine, azelaic acid |
| PA 610 | Hexamethylenediamine, sebacic acid |
| PA 612 | Hexamethylenediamine, decanedicarboxylic acid |
| PA 613 | Hexamethylenediamine, undecanedicarboxylic acid |
| PA 1212 | 1,12-Dodecanediamine, decanedicarboxylic acid |
| PA 1313 | 1,13-Diaminotridecane, undecanedicarboxylic acid |
| PA 6T | Hexamethylenediamine, terephthalic acid |
| PA MXD6 | m-Xylylenediamine, adipic acid |

| | |
|---|---|
| PA 6I | Hexamethylenediamine, isophthalic acid |
| PA 6-3-T | Trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 6I and PA 6T) |
| PA PACM 6 | Diaminodicyclohexylmethane, adipic acid |
| PA PACM 12 | Diaminodicyclohexylmethane, laurolactam |
| PA 6I/6T/PACM | as PA 6I/6T + diaminodicyclohexylmethane |
| PA 12/MACMI | Laurolactam, dimethyldiaminodicyclohexylmethane, isophthalic acid |
| PA 12/MACMT | Laurolactam, dimethyldiaminodicyclohexylmethane, terephthalic acid |
| PA PDA-T | Phenylenediamine, terephthalic acid |
| PA 6/66/136 | 4,4'-methylenebis(cyclohexylamine) adipic acid, caprolactam |

Preferred polyamides are PA 6, PA 66 and PA PACM 6.

Particularly preferred, the polyurethane polymer is a polymer prepared from diphenylmethane diisocyanate (MDI), polyethersulfone (PESU) having OH end groups and PA 6/66/136.

In this embodiment, the weight ratio of the MDI to the PESU and to the PA 6/66/136 is preferably in the range from 0.1 : 0.1 : 0.13 to 3 : 3 : 0.13, particularly preferably in the range from 0.5:0.5:0.13 to 2:2:0.13 and most preferably in the range from 0.8 : 0.8 : 0.13 to 1.5 : 1.5 : 0.13.

The preparation of the polyurethane polymer is usually carried out in the presence of an aprotic polar solvent. Suitable aprotic polar solvents are known to the skilled person. Preferably, for the aprotic polar solvent the same embodiments and preferences hold true as described above for the at least one aprotic polar solvent.

Step ii)

In step ii), the polyethersulfone polymer and the polyurethane polymer comprised in the solution (S) are separated from the at least one aprotic polar solvent comprised in the solution (S) to obtain the membrane (M).

In case the solution (S) comprises one or more further polymers, these are also separated in step ii).

In case the solution (S) comprises additionally futher solvents that differ from the at least one aprotic polar solvent, the polyethersulfone polymer and the polyurethane polymer are as well separated from these futher solvents that are no aprotic polar solvents in step ii).

The separation of the polyethersulfone polymer and the polyurethane polymer from the at least one aprotic polar solvent can be performed by any process known to the skilled person, which is suitable to separate polymers from solvents.

Preferably, the separation in step ii) is performed by a phase inversion process.

Another object of the present invention is therefore a process wherein the separation in step ii) is performed by a phase inversion process.

A phase inversion process within the context of the present invention means a process wherein the dissolved polyethersulfone polymer and the dissolved polyurethane polymer are transformed to a solid phase. Therefore, a phase inversion process can also be denoted as a precipitation process. According to step ii), the transformation is performed by separation of the polyethersulfone polymer and the polyurethane polymer from the at least one aprotic polar solvent. The person skilled in the art knows suitable phase inversion processes.

The phase inversion process can, for example, be performed by evaporation of the at least one aprotic polar solvent. It is also possible to cool down the solution (S). During this cooling down, the polyethersulfone polymer and the polyurethane polymer comprised in the solution (S) precipitate. Another possibility to perform the phase inversion process

is to bring the solution (S) in contact with a gaseous liquid that is a non-solvent for the polyethersulfone polymer and the polyurethane polymer. The polyethersulfone polymer and the polyurethane polymer will then as well precipitate. Suitable gaseous liquids that are non-solvents for the polyethersulfone polymer and the polyurethane polymer are for exmple the protic polar solvents described hereinafter in their gaseous state. Another phase inversion process which is preferred within the context of the present invention is the phase inversion by immersing the solution (S) into at least one protic polar solvent.

Therefore, in one embodiment of the present invention, in step ii) the polyethersulfone polymer and the polyurethane polymer comprised in the solution (S) are separated from the at least one aprotic polar solvent comprised in the solution (S) by immersing the solution (S) into at least one protic polar solvent.

Another object of the present invention is therefore a process wherein in step ii) the polyethersulfone polymer and the polyurethane polymer comprised in the solution (S) are separated from the at least one aprotic polar solvent comprised in the solution (S) by immersing the solution (S) into at least one protic polar solvent.

This means that the membrane (M) is formed by immersing the solution (S) into at least one protic polar solvent.

Suitable at least one protic polar solvents are known to the skilled person. The at least one protic polar solvent is preferably a non-solvent for the polyethersulfone polymer and the polyurethane polymer and is a good solvent for the at least one aprotic polar solvent.

Preferred at least one protic polar solvents are water, methanol, ethanol, n-propanol, iso-propanol, glycerol, ethylglycol and mixtures thereof.

Another object of the present invention is therefore a method wherein the at least one protic polar solvent is selected from the group consisting of water, methanol, ethanol, n-propanol, iso-propanol, glycerol and ethyl glycol.

Step ii) usually comprises a provision of the solution (S) in a form that corresponds to the form of the membrane (M) which is obtained in step ii).

Therefore, in one embodiment of the present invention, step ii) comprises a casting of the solution (S) to obtain a film of the solution (S) or a passing of the solution (S) through at least one spinneret to obtain at least one hollow fiber of the solution (S).

Another object of the present invention is therefore a process wherein step ii) comprises a casting of the solution (S) to obtain a film of the solution (S) or a passing of the solution (S) through at least one spinneret to obtain at least one hollow fibre of the solution (S).

Therefore, in one embodiment of the present invention, step ii) comprises the following steps.

ii-1) casting the solution (S) provided in step i) to obtain a film of the solution (S),
ii-2) immersing the film of the solution (S) obtained in step ii-1) into at least one protic polar solvent to obtain the membrane (M) which is in the form of a film.

Another object of the present invention is therefore a process wherein step ii) comprises the following steps:

ii-1) casting the solution (S) provided in step i) to obtain a film of the solution (S),
ii-2) immersing the film of the solution (S) obtained in step ii-1) into at least one protic polar solvent to obtain the membrane (M).

This means that the membrane (M) is formed by immersing a film of the solution (S) into at least one protic polar solvent.

In step ii-1), the solution (S) can be casted by any method known to the skilled person. Usually, the solution (S) is casted with a casting knife that is heated to a temperature in the range from 20 to 150°C, preferably in the range from 80 to 100°C.

The solution (S) is usually casted on a substrate that does not react with the polyethersulfone polymer, the polyurethane polymer or the at least one aprotic polar solvent comprised in the solution (S).

Suitable substrates are known to the skilled person and are, for example, selected from glass plates and polymer fabrics such as non-woven materials.

The thickness of the film of the solution (S) is typically in the range from 10 to 1000 μm, preferably in the range from 50 to 500 μm and particularly preferably in the range from 100 to 300 μm.

In step ii-2), the immersion of the film of the solution (S) into the at least one protic polar solvent can be performed by any method known to the skilled person. The method is, for example, described in C. A. Smolders et al., J. Membr. Sci., Vol. 73 (1992), 259.

For the at least one protic polar solvent, the embodiments and preferences described above hold true.

The at least one protic polar solvent is generally comprised in a precipitation bath. The film of the solution (S) is then immersed in this precipitation bath. In general, the film of the solution (S) is immersed into the precipitation bath together with the substrate.

The precipitation bath can additionally comprise further solvents that differ from the at least one protic polar solvent. For example, the precipitation bath can additionally comprise aprotic polar solvents. For the aprotic polar solvents, the embodiments and preferences described above for the at least one aprotic polar solvent comprised in the solution (S) hold true.

The temperature of the precipitation bath lies typically in the range from 20 to 100°C, preferably in the range from 50 to 80°C and particularly preferred in the range from 60 to 70°C.

The precipitation bath can be agitated. Preferably, the precipitation bath is not agitated.

In the precipitation bath, the membrane (M) precipitates and can be removed therefrom.

After the removing from the precipitation bath, the membrane (M) can be treated further, for example by drying or by coating of the membrane (M). These treatments of the membrane (M) are known to the skilled person.

In another embodiment of the present invention, step ii) comprises the following steps.

ii-a) passing the solution (S) provided in step i) through at least one spinneret to obtain at least one hollow fiber of the solution (S),

ii-b) immersing the at least one hollow fiber of the solution (S) obtained in step ii-a) into at least one protic polar solvent to obtain the membrane (M) which is in the form of a hollow fiber or of a multibore.

Another object of the present invention is therefore a process wherein step ii) comprises the following steps:

ii-a) passing the solution (S) provided in step i) through at least one spinneret to obtain at least one hollow fibre of the solution (S),

ii-b) immersing the at least one hollow fibre of the solution (S) obtained in step ii-a) into at least one protic polar solvent to obtain the membrane (M).

This means that the membrane (M) is formed by immersing at least one hollow fibre of the solution (S) into at least one protic polar solvent.

If step ii) comprises the above-described steps ii-a) and ii-b), this process comprises a wet spinning process.

In step ii-a), the solution (S) provided in step i) is passed through at least one spinneret to obtain at least one hollow fiber of the solution (S).

"At least one spinneret" means precisely one spinneret, and also two or more spinnerets.

Any at least one spinneret known to the skilled person can be used in step ii-a).

The at least one spinneret can comprise one single bore or two or more bores. If the at least one spinneret comprises two or more bores, the hollow fiber of the solution (S) which is obtained in step ii-a) is a multibore hollow fiber. A multibore hollow fiber is a hollow fiber having two or more bores.

When the solution (S) is passed through the at least one spinneret in step ii-a), then the solution (S) is generally extruded through the at least one spinneret into a gaseous atmosphere, in particular in air. The solution (S) can be passed through the at least one spinneret in the presence or absence of a bore liquid.

If a bore liquid is present in step ii-a), then the at least one spinneret generally comprises at least one bore through which the bore liquid can be extruded.

A "bore liquid" for the purposes of the present invention is to be understood as meaning a liquid which comes into contact with the solution (S) provided in step i) in or directly after the bore of the spinneret. The bore liquid has coagulation properties and serves to precipitate, form and stabilize the bore of the hollow fiber during the wet spinning process.

The gap between the spinneret and the at least one protic polar solvent, preferably comprised in a precipitation bath, is known as a "dry zone" and is preferably from 0.1 to 100 cm, in particular from 0.5 to 50 cm and preferably from 1 to 25 cm.

The at least one protic polar solvent and the bore liquid used are preferably liquids which are fully miscible with the aprotic polar solvent of the solution (S) provided in step i), as long as the polyethersulfone polymer and the polyurethane polymer are insoluble or partially insoluble in the bore liquid and in the at least one aprotic polar solvent.

The person skilled in the art will chose the bore liquid and the at least one protic polar solvent in relation to the aprotic polar solvent of the solution (S) provided in step i).

The bore liquid is preferably at least one protic polar solvent. Therefore, for the bore liquid, the embodiments and preferences described above for the at least one protic polar solvent hold true.

In step ii-b), the at least one hollow fiber of the solution (S) obtained in step ii-a) is immersed into at least one protic polar solvent to obtain the membrane (M). To the person skilled in the art it is clear that the membrane (M) is in the form of a hollow fiber, when at least one hollow fiber of the solution (S) is immersed into the at least one protic polar

solvent.

If the at least one spinneret in step ii-a) comprises two or more bores, then the hollow fiber is in the form of a multibore and therefore the membrane (M) obtained in step ii-b) is as well in the form of a multibore.

For step ii-b), the same embodiments and preferences described above for step ii-2) hold true.

Membrane (M)

In step ii), the membrane (M) is obtained.

The membrane (M) comprises the polyethersulfone polymer and the polyurethane polymer. In case the solution (S) contained a further polymer, the membrane (M) also comprises the further polymer. In one embodiment the membrane (M) does not comprise a further polymer.

The polyethersulfone polymer and the polyurethane polymer are preferably homogeneously distributed in the membrane (M).

The membrane (M) comprises generally in the range from 34 to 99.9999% by weight, preferably in the range from 56 to 99.6% by weight and particularly preferably in the range from 61 to 97.8% by weight of the polyethersulfone polymer and in the range from 0.0001 to 66% by weight, preferably in the range from 0.4 to 44% by weight and particularly preferably in the range from 2.2 to 39% by weight of the polyurethane polymer, based on the sum of the percent by weight of the polyethersulfone polymer and the polyurethane polymer, preferably based on the total weight of the membrane (M).

If the solution (S) comprises further additives, then generally the membrane (M) as well comprises the further additives.

The at least one pore former agent which in one embodiment of the present invention was comprised in the solution (S) generally is not comprised in the membrane (M) as the at least one pore former agent typically is dissolved during the formation of the membrane (M).

Therefore, in one embodiment, the membrane (M) is essentially free from the at least one pore former agent. "Essentially free" within the context of the present invention means that the membrane (M) comprises at most 1% by weight, preferably at most 0.5% by weight and particularly preferably at most 0.1% by weight of the at least one pore former agent, based on the total weight of the membrane (M).

The membrane (M) comprises at least 0.0001% by weight, preferably at least 0.001% by weight and particularly preferably at least 0.01% by weight of the at least one pore former agent, based on the total weight of the membrane (M).

During the formation of the membrane (M), the polyethersulfone polymer and the polyurethane polymer are separated from the at least one aprotic polar solvent. Therefore, the obtained membrane (M) is essentially free from the at least one aprotic polar solvent. "Essentially free" within the context of the present invention means that the membrane (M) comprises at most 1% by weight, preferably at most 0.5% by weight and particularly preferably at most 0.1% by weight of the at least one aprotic polar solvent, based on the total weight of the membrane (M). The membrane (M) comprises at least 0.0001% by weight, preferably at least 0.001% by weight and particularly preferably at least 0.01% by weight of the at least one aprotic solvent, based on the total weight of the membrane (M).

The percent by weight of the polyether sulfone polymer, the polyurethane polymer and optionally of the further additives, the pore former agent and the at least one aprotic polar solvent comprised in the membrane (M) generally add up to 100 %.

Depending on the steps comprised in step ii), the membrane (M) obtained in step ii) has a form which is selected from the group consisting of a film, a hollow fiber or a multibore.

Another object of the present invention is therefore a process wherein the membrane (M) obtained in step ii) has a form, which is selected from the group consisting of a film, a hollow fibre and a multibore.

If the membrane (M) is in the form of a film, the thickness is preferably in the range from 10 to 1 000 μm, particularly preferably in the range from 50 to 500 μm and more preferably in the range from 100 to 300 μm.

If the membrane (M) is in the form of a hollow fiber, its thickness is preferably in the range from 10 to 200 μm, preferably in the range from 20 to 100 μm.

If the membrane (M) is in the form of a multibore, the thickness is preferably in the range from 2 to 200 μm, preferably in the range from 20 to 100 μm.

Within the context of the present invention, "the thickness of the multibore" and "the thickness of the hollow fibre" refer to the wall thickness and not to the diameter of the fibre.

Another object of the present invention is therefore also a membrane (M) which comprises a polyethersulfone polymer and a polyurethane polymer.

The inventive membrane (M) exhibits a high elongation at break.

Therefore, another object of the present invention is the use of a polyurethane polymer in a membrane (M), which comprises a polyethersulfone polymer, to increase the elongation at break of the membrane (M).

Another object of the present invention is the use of a polyurethane polymer in a membrane (M) which comprises

a polyethersulfone polymer in a process selected from the group consisting of an ultrafiltration process and a reverse osmosis process.

Ultrafiltration processes as well as reverse osmosis processes are known to the skilled person.

The present invention is described in more detail by the examples hereinafter without being restricted thereto.

## Examples

Syntheses of the polyurethane polymer

The polyurethane polymer was synthesized using a two-step solution polymerization method. Prior to the reaction, the glasswares were dried at 110°C to remove moisture. PES (also denominated as polyethersulfone) of molecular weight 7800 and Ultramid 1C (trade name of PA 6/66/136 of BASF SE) were used. In a first step, MDI was dissolved in anhydrous NMP with a total MDI concentration of 10 wt./vol.-% and then a few drops of the initiator Dibutyltin Dilaurate was introduced into the solution. After passing through nitrogen for 15 min, Ultramid 1C in hot anhydrous NMP was added drop-wise into the solution and left to stir at 70°C for 3 h to form a prepolymer. For the second step, PES in anhydrous NMP was introduced drop-wise over 15 min and the reaction was carried out at 80°C for 4 h. The weight mixing ratio of PES : Ultramid 1C : MDI was 1 : 1 : 0.13. The temperature was increased to 85°C and kept for 24 h. The polyurethane solution was then added into the appropriate non-solvent (such as diethyl ether, dichloromethane) under vigorous stirring to precipitate the polymer. The polymer was washed several times with dichloromethane and was left to dry under vacuum at 50°C for 3 days.

Preparation of a membrane (M)

Ultrason E3010 (trade name of PESU of BASF SE) was used as polyethersulfone polymer and the synthesized polyurethane polymer was used. NMP was used as aprotic polar solvent. The total polyethersulfone polymer concentration in the solution (S) and the polyurethane polymer concentration was set as shown in table 1. As pore former agent, polyethylene glycol 400 was used with the concentration given in table 1.

The solutions (S) were casted on a glass plate with a casting knife heated at 90°C. The thickness of the casted film was maintained at 200 μm. The film of the solution (S) on the glass plate was immersed into a deionized water precipitation bath at room temperature. Each membrane was kept in deionized water for at least 24 h before it was used for UF experiments to determine water flux and pore size distribution (Molecular weight cut-off, MWCO).

Flat sheet membrane experiments were performed using a 50 mL dead-end filtration cell with an effective membrane area ($m_a$) of 9.616 $cm^2$. The trans-membrane pressure was kept constant at 1 bar by applying pressure from $N_2$ gas, and the filtration cell was stirred at 200 rpm using a stirrer plate. The filtration was pre-run for 30 min before measuring the pure water permeability. The permeation data (permeate volume, $V_p$) were collected at fixed time intervals (t) to determine the water flux, $J_w$, until the flux remained constant for at least three successive readings. $J_w$ is defines as follows:

$$J_w = \frac{V_p}{m_a \times t}$$

Molecular weight cut-off (MWCO) experiments were conducted using a PEG aqueous solution of 1000 ppm and was pre-run for 15 min before the permeate solution was collected. The MWCO results were obtained by analyzing the feed and permeate solution by gel permeation chromatography (GPC) in a Agilent (Infinity 1260) equipment with a refractive index detector equipped with an aqueous column (PL aquagel-OH MIXED-H, 8 μm, 300 X 7.5 mm) eluted at 0.7 mL/min in 0.1 M sodium nitrate with 100 ppm sodium azide solution at 40 °C. The GPC column was previously calibrated using PEG standards in deionized water. Solute rejection (r) in % was calculated after analyzing the solute concentration of the feed ($C_f$) and permeate ($C_p$):

$$r = 100 \cdot \frac{C_f - C_p}{C_f}$$

MWCO is considered as the smallest solute molecular weight with 90% rejection (r) by the membrane.

The morphology of the dense films were observed using FESEM as shown in Fig. 1a, b and c. Fig. 1a, b and

c show the obtained films for example 2.

Table 1

| Example | Polyethersulfone polymer (wt.-%) | Polyurethane polymer (wt.-%) | Pore former agent (wt.-%) | NMP (wt.-%) | Water Flux/LMH | MWCO |
|---|---|---|---|---|---|---|
| 1 | 15.0 | 5.0 | 0.0 | 85.0 | No flux | N.A. |
| 2 | 15.0 | 5.0 | 5.0 | 85.0 | 21.1 | 1,085,723 (at 50% Rejection) |

## Claims

**1.** A process for the preparation of a membrane (M), which comprises a polyethersulfone polymer and a polyurethane polymer, comprising the steps:

i) providing a solution (S), which comprises the polyethersulfone polymer, the polyurethane polymer and at least one aprotic polar solvent,
ii) separating the polyethersulfone polymer and the polyurethane polymer comprised in the solution (S) from the at least one aprotic polar solvent comprised in the solution (S) to obtain the membrane (M).

**2.** The process according to claim 1, wherein the separation in step ii) is performed by a phase inversion process.

**3.** The process according to claim 1 or 2, wherein in step ii) the polyethersulfone polymer and the polyurethane polymer comprised in the solution (S) are separated from the at least one aprotic polar solvent comprised in the solution (S) by immersing the solution (S) into at least one protic polar solvent.

**4.** The process according to any one of claims 1 to 3, wherein the at least one aprotic polar solvent, which is comprised in the solution (S) is selected from the group consisting of N-methyl-2-pyrrolidone, N-ethyl-2-pyrrolidone, sulfolane, dimethylsulfoxide, dimethylformamide, anisole and dimethylacetamide.

**5.** The process according to claim 3 or 4, wherein the at least one protic polar solvent is selected from the group consisting of water, methanol, ethanol, n-propanol, iso-propanol, glycerol and ethyl glycol.

**6.** The process according to any one of claims 1 to 5, wherein the solution (S) comprises in the range from 5 to 30% by weight of the polyethersulfone polymer based on the total weight of the solution (S).

**7.** The process according to any one of claims 1 to 6, wherein the solution (S) comprises in the range from 0.0001 to 15% by weight of the polyurethane polymer based on the total weight of the solution (S).

**8.** The process according to any one of claims 1 to 7, wherein the solution (S) additionally comprises at least one pore former agent.

**9.** The process according to any one of claims 1 to 8, wherein step ii) comprises a casting of the solution (S) to obtain a film of the solution (S) or a passing of the solution (S) through at least one spinneret to obtain at least one hollow fibre of the solution (S).

**10.** The process according to any one of claims 1 to 9, wherein the membrane (M) obtained in step ii) has a form, which is selected from the group consisting of a film, a hollow fibre and a multibore.

**11.** The process according to any one of claims 1 to 10, wherein step ii) comprises the following steps:

ii-1) casting the solution (S) provided in step i) to obtain a film of the solution (S),
ii-2) immersing the film of the solution (S) obtained in step ii-1) into at least one protic polar solvent to obtain the membrane (M).

**12.** The process according to any one of claims 1 to 10, wherein step ii) comprises the following steps:

ii-a) passing the solution (S) provided in step i) through at least one spinneret to obtain at least one hollow fibre of the solution (S),
ii-b) immersing the at least one hollow fibre of the solution (S) obtained in step ii-a) into at least one protic polar solvent to obtain the membrane (M).

**13.** The use of a polyurethane polymer in a membrane (M), which comprises a polyethersulfone polymer, to increase the elongation at break of the membrane (M).

**14.** The use of a polyurethane polymer in a membrane (M) which comprises a polyethersulfone polymer in a process selected from the group consisting of an ultrafiltration process and a reverse osmosis process.

**15.** A membrane (M), which comprises a polyethersulfone polymer and a polyurethane polymer.

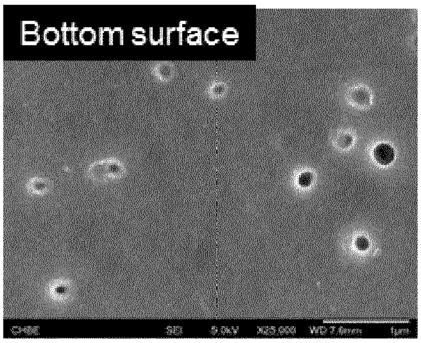


25,000 x

Figure 1a

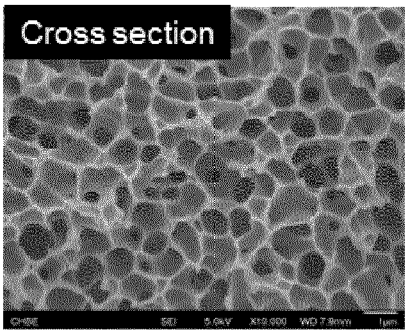


10,000 x

Figure 1b

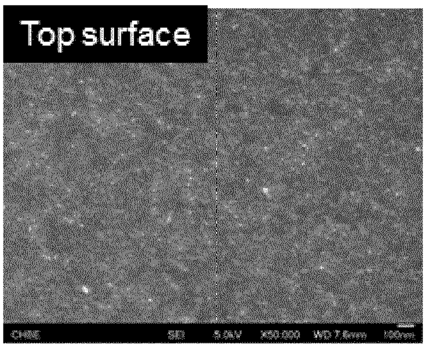


50,000 x

Figure 1c

Europäisches Patentamt
European Patent Office
Office européen des brevets

# EUROPEAN SEARCH REPORT

Application Number
EP 15 19 1685

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | CN 102 019 150 B (HUIZHOU QIXIN MEMBRANE PURIFICATION & ENVIRONMENT PROT CO LTD) 2 April 2014 (2014-04-02) * embodiment 1-4; claims 1-11 * ----- | 1-15 | INV. B01D67/00 B01D71/68 |
| X | CN 104 437 136 A (HUA WENWEI) 25 March 2015 (2015-03-25) * embodiments 1-3; claims 1-3 * ----- | 1-15 | |
| X | SHAHAB SAEDI ET AL: "The effect of polyurethane on the structure and performance of PES membrane for separation of carbon dioxide from methane", JOURNAL OF INDUSTRIAL AND ENGINEERING CHEMISTRY, vol. 20, no. 4, 1 July 2014 (2014-07-01), pages 1916-1929, XP055264563, KOREA ISSN: 1226-086X, DOI: 10.1016/j.jiec.2013.09.012 * abstract * * section 2.3; tables 2,4 * ----- | 1-7,9-15 | TECHNICAL FIELDS SEARCHED (IPC) B01D |

The present search report has been drawn up for all claims

1

| Place of search | Date of completion of the search | Examiner |
| --- | --- | --- |
| Munich | 12 April 2016 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 19 1685

This annex lists the patent family members relating to the patent documents cited in the above-mentioned European search report. The members are as contained in the European Patent Office EDP file on
The European Patent Office is in no way liable for these particulars which are merely given for the purpose of information.

12-04-2016

| Patent document cited in search report | Publication date | Patent family member(s) | Publication date |
|---|---|---|---|
| CN 102019150 B | 02-04-2014 | NONE | |
| CN 104437136 A | 25-03-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **K. B. LEE et al.** *Journal of Membrane Science,* 2011, vol. 370, 1-22
- Basic polymers and their special characteristics. *Plastics - Symbols and abbreviated terms,* 2001
- Polysulfones. **HERMAN F. MARK.** Encyclopedia of Polymer Science and Technology. 2003, vol. 4, 2-8
- Aromatic Polyethers. **HANS R. KRICHELDORF.** Handbook of Polymer Synthesis. 2005, 427-443
- Kunststoffhandbuch. Vol. 7. Polyurethane. Karl-Hanser-Verlag, 1993, vol. 7
- **C. A. SMOLDERS et al.** *J. Membr. Sci.,* 1992, vol. 73, 259